Europäisches Patentamt

European Patent Office

Office européen des brevets

(19)

(11) Publication number: **0 148 596**
A1

# (12) EUROPEAN PATENT APPLICATION

(21) Application number: **84308561.4**

(22) Date of filing: **10.12.84**

(51) Int. Cl.⁴: **A 61 G 5/00**, B 62 D 47/00, B 60 P 3/42

(30) Priority: **09.12.83 GB 8332915**

(43) Date of publication of application: **17.07.85** Bulletin 85/29

(84) Designated Contracting States: **AT BE CH DE FR GB IT LI LU NL SE**

(71) Applicant: **CARBODIES LIMITED, Holyhead Road, Coventry CV5 8JJ (GB)**

(72) Inventor: **James, Peter Denis, 48, Grange Avenue, Kenilworth, Warwickshire (GB)**

(74) Representative: **Harrison, Gordon Donald et al, FORRESTER & BOEHMERT Widenmayerstrasse 4/I, D-8000 München 22 (DE)**

(54) Road vehicles.

(57) A passenger carrying road vehicle is adapted to carry a disabled person in a wheelchair by the provision of an auxiliary area (16) adjacent to the driver's area (12) and accessible from the main passenger area (14). A movable partition (20) is preferably provided so that the auxiliary area (16) can be separated from the main passenger area (14) when not required for transportation of a wheelchair so as to make the auxiliary area available to be used for other purposes such as luggage space or additional passenger space forward of the partition.

EP 0 148 596 A1

0148596

This invention relates to road vehicles, primarily of the kind intended for carrying passengers, and has for its object the provision of means to facilitate the transport of a passenger in a wheelchair.

In accordance with the invention, we provide a passenger-carrying road vehicle having a compartment which affords a driving area equipped with driving controls, a main passenger area rearwardly of the driving area with seating for at least one passenger in addition to the driver, and an auxiliary area laterally adjacent to the driving area and forming an extension of the main passenger area so dimensioned as to enable a wheelchair and a person in such wheelchair to be accommodated in the extended passenger area.

The auxiliary area is preferably provided with a movable partition which in one position divides the auxiliary area from the main passenger area for use for example as a luggage area, and which in another position makes at least part of said auxiliary area available as said extension of the main passenger area.

Whilst the invention would normally be applied to a vehicle designed primarily for carrying passengers, under some circumstances it could with advantage be applied to vehicles, such as vans, which are primarily intended for carrying goods, or vehicles of the caravan type in which the main compartment serves as living/sleeping accommodation.

Thus the invention also resides in a road vehicle having a compartment with a main usable area and an auxiliary area adjacent thereto, wherein a movable partition is provided which in one position separates the auxiliary area from the main usable area, and which in another position allows at least part of the auxiliary area to serve as an extension area of the main usable area whereby a wheelchair and a person therein may be accommodated at least partially in said extension area.

In a preferred arrangement, the movable partition is movable in the fore and aft direction, and is constructed as a bulkhead which is capable of being secured firmly in load-transmitting manner to the vehicle body structure and extends effectively over the full height of the compartment and across the full width of the auxiliary area.

The bulkhead may incorporate runners engageable in tracks carried by the vehicle body structure and releasable locking means for securing the bulkhead in said alternative positions, and optionally in one or more intermediate positions.

In one embodiment, the bulkhead may be provided with two upper runners at its upper edge which engage tracks mounted on the compartment roof, and two lower runners at its lower edge which engage tracks mounted on the compartment floor. The runners may comprise roller assemblies, each having a pair of rollers spaced longitudinally of the tracks, but some or all of such runners may be slidably engaged with the respective track.

The locking means may be in the form of a plunger which is engageable in holes which may be formed in one or more of the tracks or in one or more locking rails extending parallel to such tracks.

In a further embodiment, the bulkhead may be provided with two upper runners at its upper edge which engage tracks mounted at the compartment roof, and a lateral runner engaging a track mounted at a position spaced above the compartment floor so as to leave the compartment floor clear. In this case, the locking means may be in the form of plungers engageable in locking rails recessed into the floor, but preferably the locking means are associated with the tracks. In the latter case, the locking means may include members which are arranged to engage respective pins.

The locking mechanism is preferably provided with an operating mechanism on the forward side of the bulkhead so that the driver can move the bulkhead from within the driving area, and the rear side of the bulkhead may be equipped with a folding seat.

Whilst the bulkhead is preferably movable manually, it would be possible to provide for powered operation, for example by means of an electric motor driving one or more of the rollers, or a pinion which engages a fixed track.

Although the bulkhead is most conveniently mounted for sliding movement in a fore-and-aft direction, it could alternatively be hinged or arranged to slide transversely.

In addition to the movable partition or bulkhead, the main area may be divided from the driving area by means of a fixed partition or bulkhead, and a further partition may be provided between the driving area and the auxiliary area.

The main area should have an external door immediately adjacent to the movable partition, and said door should be of a width such as to enable a wheelchair to pass through into and out of the main area. A foldable or removable ramp may be provided to facilitate movement of a wheelchair through such door.

Whilst the auxiliary area is primarily intended to serve the dual purpose of affording either a luggage area separated from the main passenger area and accessible by means of an external door, or an extension of the passenger area accessible therefrom and capable of accommodating a wheelchair, it may also be used for other purposes. In particular, where the vehicle is provided with a rear tail gate or door giving access to the rear of the passenger area, the auxiliary area may receive the forward end of a stretcher arranged lengthwise of the vehicle. In this case, at least that part of the passenger seating which is arranged directly behind the auxiliary area may be foldable downwardly or at least partially movable to form a clear area extending from the auxiliary area to the rear of the vehicle for the reception of a stretcher, or other long load. Conveniently, removable rails are provided to extend between the bulkhead (when in a forwardly displaced position) and the rear of the vehicle to facilitate loading and unloading of such stretcher. In this way, the vehicle may also serve as an ambulance.

Whilst the invention is primarily applicable to a passenger-carrying vehicle in the form of a taxi or hire car, it will be appreciated that it is also applicable to a larger vehicle, such as a mini-bus or a public service vehicle. In the latter case, for example, the auxiliary area need not be disposed laterally adjacent to the driving area, but may be arranged at any convenient location, preferably immediately adjacent to a main passenger access door.

Nevertheless, when appied to a taxi or car, the invention has the advantage of making provision for a disabled passenger in a wheelchair without requiring the length of the vehicle to be increased beyond normally acceptable limits.

These and other features of the invention will now be described by reference to specific embodiments of the invention, as illustrated in the accompanying drawings, wherein:-

FIGURE 1 is a diagrammatic plan view of a vehicle compartment fitted with a movable partition and affording accommodation for a wheelchair in accordance with the invention;

FIGURE 2 shows a front view of one embodiment of movable partition and the associated mounting and locking means;

FIGURE 3 is a side view corresponding to Figure 2;

FIGURE 4 is a front perspective view of the movable partition shown in Figure 2;

FIGURE 5 is a rear perspective view showing the movable partition of Figure 2 and adjacent areas of the vehicle;

FIGURE 6 is a rear perspective view showing a further embodiment of movable partition and adjacent areas of the vehicle in which it is mounted; and

FIGURES 7 and 8 show a further embodiment of movable partition in views corresponding to Figures 4 and 5.

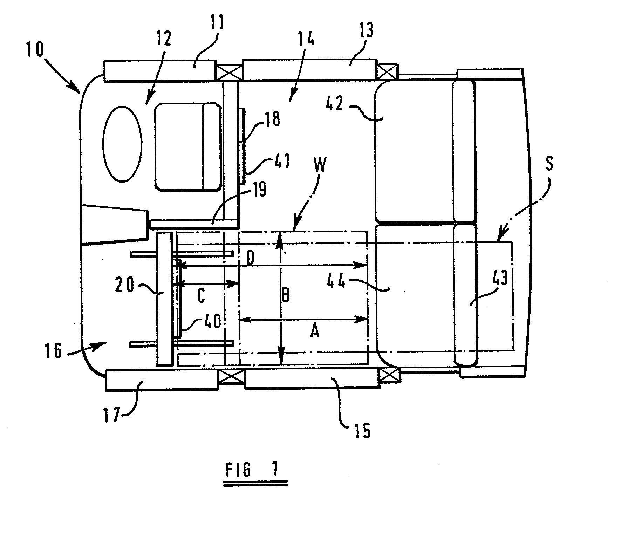

Referring firstly to Figure 1, the typical vehicle in accordance with the invention includes a main compartment 10 which affords a driving area 12 at the front and a main, passenger area 14 at the rear. Laterally adjacent to the driving area, is an auxiliary area 16 which may be used for luggage or in some cases a further passenger. Access to the driving area is by way of door 11, to the main area by way of doors 13 and 15, and access to the auxiliary area is normally by way of door 17, when required.

As illustrated, the main area 14 is divided from the driving area by means of a fixed partition 18, and from the auxiliary area 16 by means of a movable partition 20. Additionally, a lateral partition 19 may be provided between the driving area 12 and the auxiliary area 16. Whilst in the illustrated embodiments hereinafter described the partition 20 is movable fore-and-aft it could instead be movable transversely across the vehicle, or be hinged, or in some cases fixed permanently in the forward position in use.

A foldable or detachable ramp may be provided to enable a wheelchair to be moved forwardly into the main area 14 through door 15, the wheelchair then being reversed into the forward extension of the passenger area available in the auxiliary area 16 when the partition 20 is in its forward position, as shown in Figure 1. In a typical case, the dimension A between the main passenger seat 42 and the opposed door pillar would typically be not less than 830mm, whilst the maximum amount of movement C available to the partition 20 would be approximately 420mm, so as to give a total wheelchair space W having a width B of at least 815mm and a length D of at least 1250mm.

In addition to the main passenger seat 42, the movable and fixed partitions may carry respective hinged seats 40 and 41. If the auxiliary area is intended for conveying a further passenger when the partition 20 is in its rearward position, the partition could carry a further foldable seat at its forward side. Additionally, where the compartment 10 has a rear tail gate or other opening rear door, the back part 43 and seat part 44 of the seat 42 immediately to the rear of the movable partition 20 may be foldable, or movable onto the floor of the passenger area 14, so as to afford a stretcher space S, whereby a stretcher may be loaded into the compartment through the rear when the partition 20 is in its forward position. To facilitate this, suitable runners could be provided for mounting between the partition and the rear of the compartment 10 and adapted to receive a stretcher, or indeed any other elongated load.

Referring now to Figures ·2 to 5 of the accompanying drawings, the embodiment shown therein utilises a partition 20 carrying upper support assemblies 21 and 22 which include rollers 23 engageable in parallel tracks 24 secured to or adjacent to the roof structure of the compartment. The partition 20 further includes lower support assemblies 25 and 26, which incorporate rollers 27 engaging on tracks 29 secured to the floor structure of the compartment. As can be seen, each support assembly includes a pair of rollers spaced apart longitudinally relative to the corresponding track. The upper tracks 24 are of generally C-shape in section, with the rollers 23 disposed within the interior of the track. The lower tracks 29 are generally of "top-hat" section and the rollers 27 engage the upper face thereof. The lower support assemblies include roller housings 28 having depending sides which co-operate with the vertical sides of the track to guide the partition for movement in the fore and aft direction. It will of course be appreciated that other types of support assembly and track could be used and further embodiments illustrating other arrangements are shown in Figures 6 to 8 as hereinafter described.

The partition 20 carries a locking mechanism 30 which is largely concealed within the thickness of the partition and which in the illustrated embodiment includes two plungers 31 at spaced positions along the bottom edge of the partition. The plungers are movable in guides 32 so as to co-operate with locking rails 33 and be selectively engageable in holes 34 formed therein. The plungers 31 are interconnected by means of a transverse rod 35 which includes a shaped handle portion 36 which is disposed adjacent to a fixed handle 37 available at the forward side of the partition. The arrangement is such that the driver may grip both the fixed handle 37 and the movable handle portion 36 in one hand and lift the latter to release the plungers, and move the partition 20 manually in either direction.

If desired, further plungers could be provided at the upper edge of the partition, linked to the transverse rod 35, for example, by means of respective levers pivotally mounted intermediate their ends.

In the embodiment illustrated, the locking rails 33 are formed integrally with the lower tracks 29, but it will be appreciated that separate locking rails may be provided. Whilst the plungers 31 are conveniently operable in a vertical direction, it will be appreciated that it would alternatively be possible to employ plungers arranged for movement in a horizontal direction.

Whilst the partition 20 is movable manually in the illustrated embodiment by direct action, it would be possible to provide a manual or powered winch-type mechanism for example, in which a cable is wound around a pulley, or a chain engages a sprocket. Alternatively, other powered mechanisms could be utilised to move the partition, for example involving driving one or more of the rollers 23 or 27 by means of an electric motor, or driving a pinion meshing with a fixed rack carried by the roof or floor or other structure. Again, in some cases, the partition could be moved by means of an hydraulic or pneumatic ram assembly.

In use, the partition 20 would normally occupy a rearward position so that the full area of the auxiliary area 16 is available for luggage or an additional passenger. However, when it is required to carry a wheelchair passenger, the partition 20 can be moved forwardly by the driver so as to provide an extension to the passenger area capable of accommodating a wheelchair. The rearward side of the partition is preferably equipped with suitable means (not shown) for anchoring a wheelchair in position, or such means may be provided on the floor or other adjacent parts of the vehicle body. In the illustrated embodiment, the maximum forward movement of the partition leaves part of the auxiliary area 16 available for luggage, but it will be appreciated that in some cases the partition may be required to be movable effectively to the front of the auxiliary area 16.

As mentioned previously, such a movable partition may be installed in vehicles other than taxis and private cars in order to form a temporary extension of the normal passenger area, so as to enable a wheelchair passenger to be accommodated. However, it could also be possible, within the scope of the invention, for such a partition to be secured permanently in the forward position so as to provide, for example, a private car permanently adapted for conveyance of a wheelchair passenger.

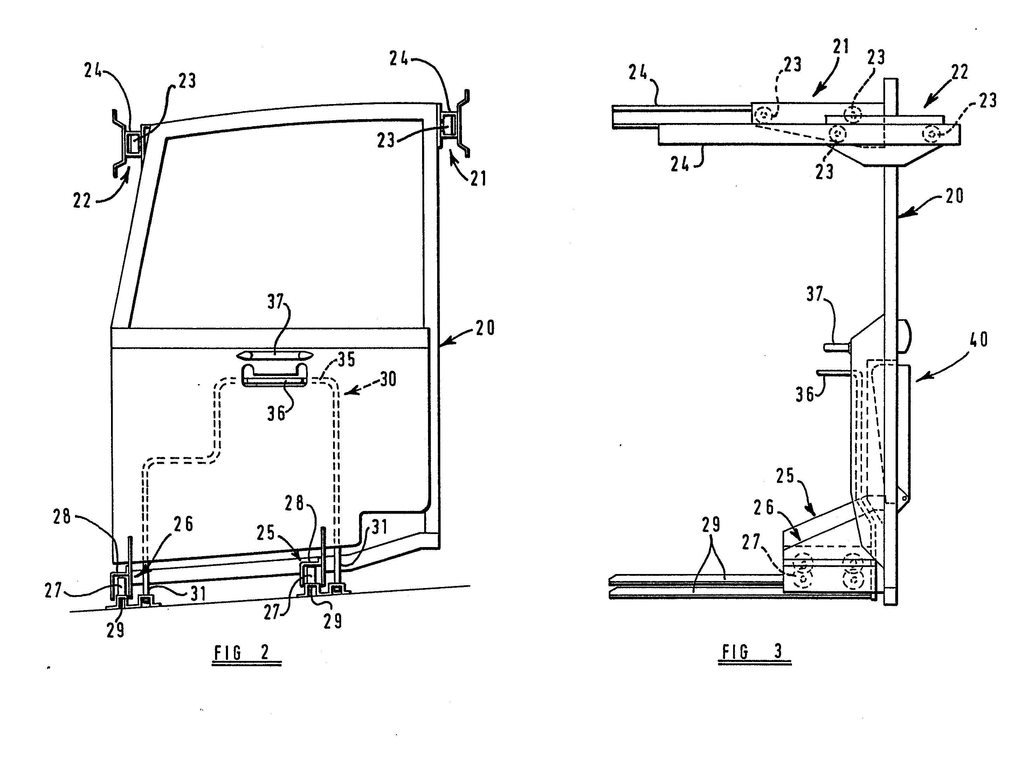

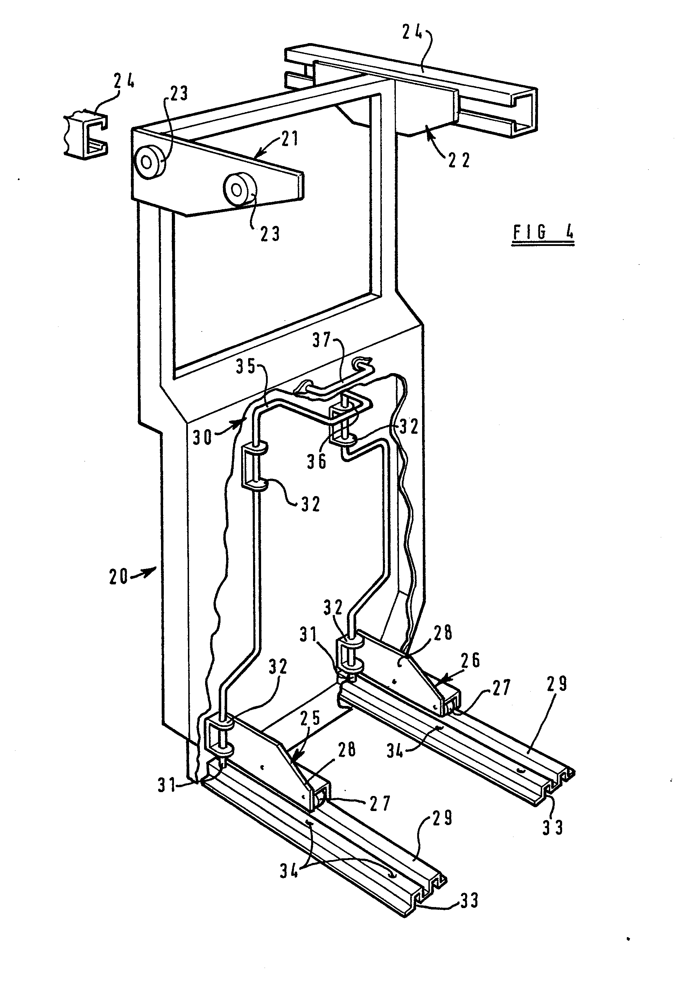

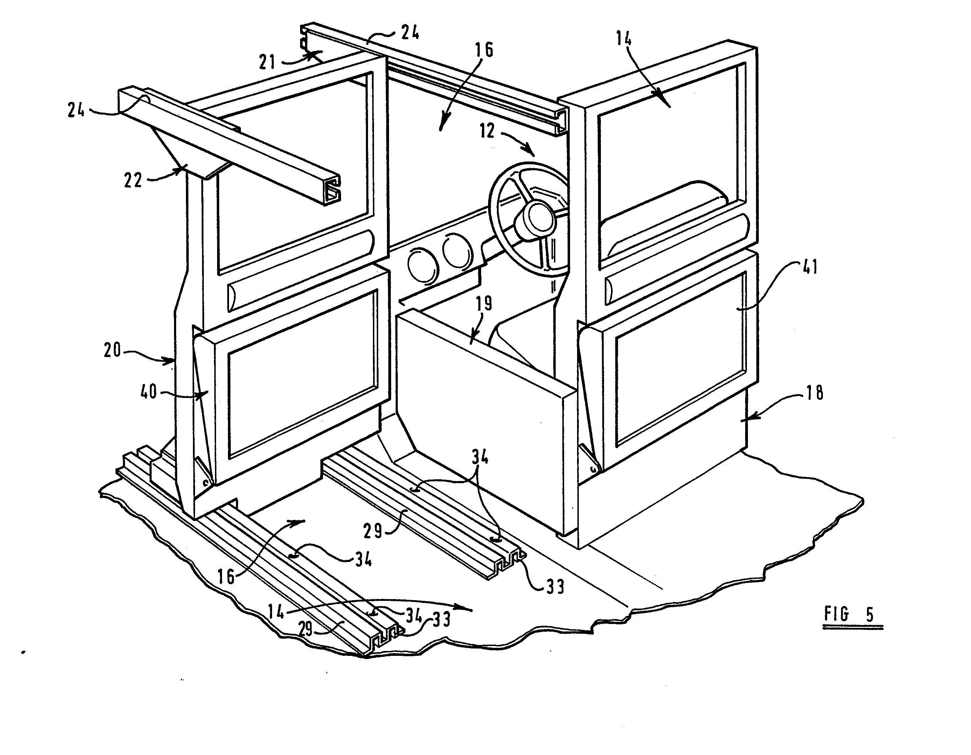

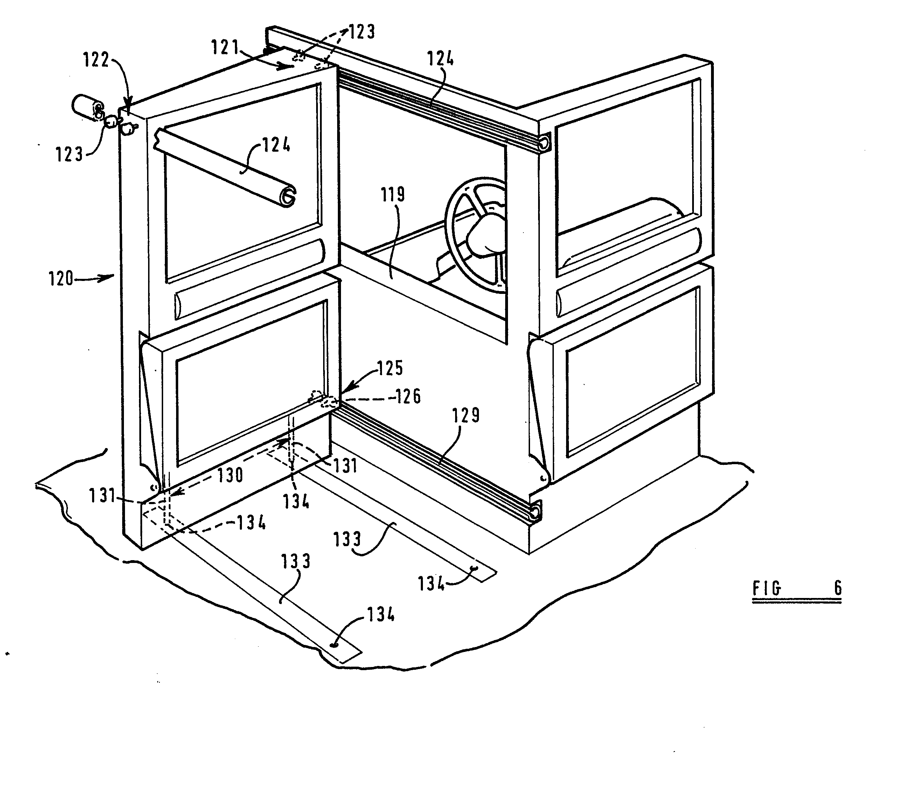

Instead of using upper and lower support assemblies as shown in Figures 2 to 5, in an alternative embodiment illustrated in Figure 6, a generally similar partition 120 carries modified upper support assemblies 121 and 122 which include rollers 123 engageable in parallel tracks 124 which are formed as slotted tubes. Each support assembly 121 and 122 carries two spaced rollers 123 which engage within the respective tube. The partition 120 includes a single lower support assembly 125 at its inboard edge. The assembly 125 is generally similar to the corresponding upper assembly 124 and incorporates rollers 126 which engage in a track 129, which is also in the form of a slotted tube, carried by lateral partition 119 at a position spaced somewhat above the floor of the compartment. A locking mechanism 130, is provided which is similar in principle to the mechanism 30 illustrated in Figure 4, and includes plungers 131 arranged to co-operate with a pair of locking rails 133 which are recessed into the floor of the compartment and afford appropriate holes 134 for engagement by the plungers 131 of the locking mechanism. As in the previously described embodiment, said plungers may be resiliently biased into operative positions so as to enter the holes 134 automatically when aligned therewith and for this purpose suitable stop members may be provided to limit movement of the partition and assist in aligning the plungers with the holes.

In the embodiment shown in Figure 6, the movable partition 120 is guided by three support assemblies, 121, 122, 125 respectively at the inboard and outboard ends of the upper edge of the partition, and adjacent to the lower edge of the partition on the inboard edge thereof. The partition can be constructed sufficiently rigidly to obviate the need for a further support assembly at the bottom of the outboard edge, and by arranging the outboard locking rail adjacent to the outboard edge of the partition, it is possible to ensure that the latter is securely held at its lower, outboard corner by engagement of the appropriate locking plunger 131 into the hole 134 when it is in both forward and rearward positions, as well as being held in a similar manner at the other corners so that it serves as a load transmitting bulkhead.

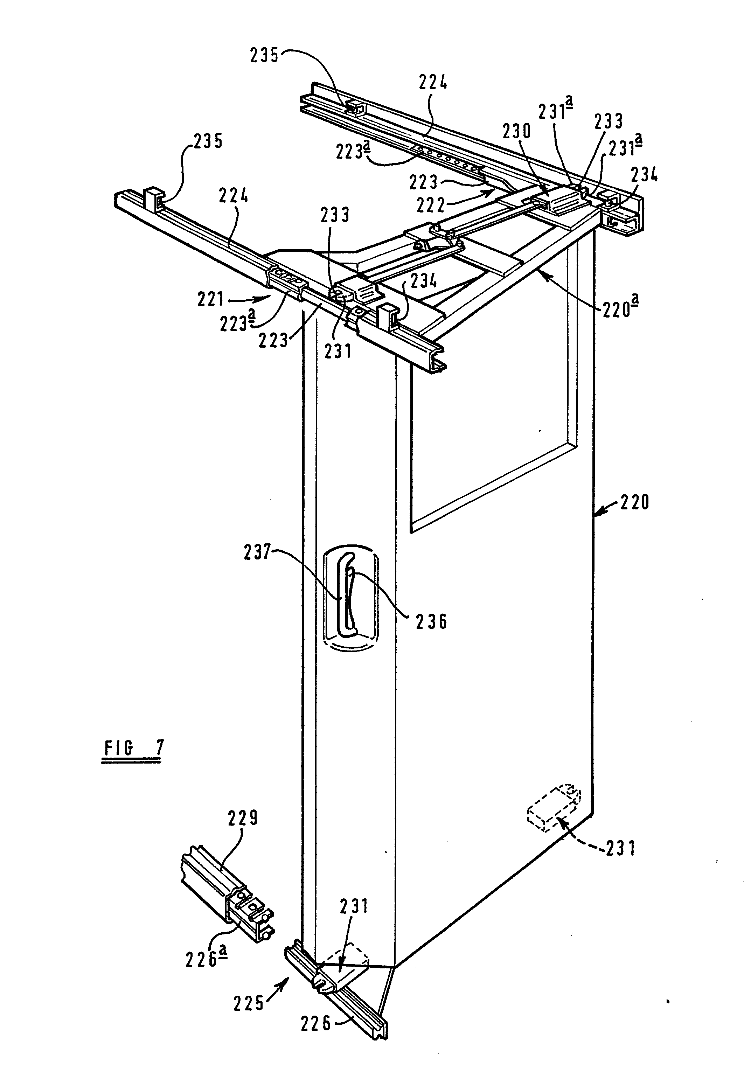

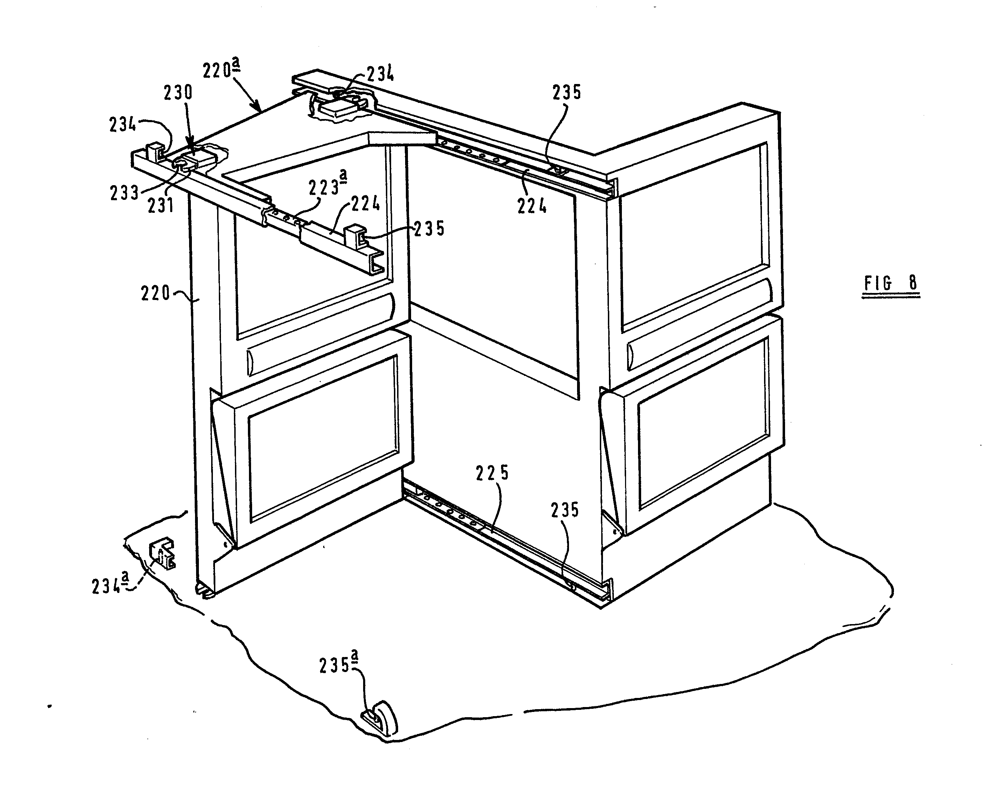

Figures 7 and 8 illustrate a still further embodiment of sliding paritition which, as in the Figure 6 embodiment has three, similarly positioned, support assemblies, but in this case the locking mechanism is associated primarily with tracks in which such support assemblies run, so as to leave the floor of the auxiliary area substantially unobstructed. In this embodiment, the further modified partition 220 includes an upper horizontal sub-frame structure 220a which is rigid in the horizontal plane and carries at its inboard and outboard edges respective support assemblies 221 and 222 each of which includes an elongated support or runner member 223 secured to the sub-frame 220a and engaging within a respective roller carrier member 223a which itself runs in a corresponding elongated track 224. The arrangement is of a known kind wherein the roller carrier member 223 is movable within the track 224 whilst the support member 223 is movable within the carrier member 223a. In this way, the support member is supported over a relatively long distance, thereby resisting any tendency of the partition 220 to twist and jam as it is moved in the fore-and-aft direction, whilst, due to the relative movement between the support member and the carrier member, the desired range of travel can be achieved.

A similar track 229 is provided on the lateral partition 19 at a position spaced somewhat above the level of the floor of the compartment to receive a further elongated support member 226 of a third support assembly 225 at the inboard edge of the partition adjacent to the lower edge thereof, the member 226 running in a roller carrier member 226a engaged in the track 229.

For locking purposes, a mechanism 230 is provided which incorporates four spring-loaded locking members 231, two on the sub-frame structure 220a at the inboard and outboard edges thereof, and two at the lower edge of the partition 220 at the inboard and outboard edges thereof. Each locking member includes a central recess 233 which is adapted to engage a corresponding pin 234 or 234a when the partition is in its forward position, or a corresponding pin 235 or 235a when the partition is in its rearward position.

The pins 234 and 235 are mounted immediately adjacent to the tracks 224 and 225, whilst the pins 234a and 235a are mounted directly on the vehicle structure at the junction between the floor and side of the compartment.

The pairs of locking members respectively at the top and bottom of the partition 220 are interconnected by a suitable linkage whereby they can be retracted so as to disengage from the respective pins and allow the partition to be moved. The lateral faces of the locking members on opposite sides of the central recess 233 are chamfered so as to form cam faces 231a which, as the partition is moved into either of its extreme positions, engage the corresponding pins and cause the locking members to retract inwardly against the resilient bias. Appropriate stop means (not shown) are provided at each end of the desired range of movement, so that when the partition 220 engages such stop members the locking members 231 are urged outwardly again by their associated spring means and the associated pins 234, 234a or 235, 235a are received within the central recess 233 in order to hold the partition in position in a load transmitting manner.

The locking mechanism 230 is provided with an operating mechanism which includes a lever 236 disposed inside a hand grip 237 carried on the forward face of the partition adjacent the inboard edge thereof on an angled marginal portion. The lever 236 is connected by suitable transmission means such as cables or linkages to the operating linkages associated with the locking members at the top and bottom of the partition. In use, the driver of the vehicle can grasp the hand grip 237 for the purpose of moving the partition forwardly or rearwardly, whilst simultaneously operating the lever 236 to release the locking members 231. Provision may be made for deadlocking the locking members 231 in their operative positions to prevent inadvertent retraction. This could be achieved by means of an auxiliary locking plunger system to engage the locking members in such a manner as positively to prevent retraction thereof until the plungers themselves are withdrawn by operation of, for example, a safety catch associated with the hand grip 237. Alternatively, an electric locking system could be employed. The latter arrangement has the advantage that it could be interlocked with the vehicles ignition system to prevent use of the vehicle unless the partition is secured.

Whilst, in the above-described embodiments, the movable partition is mounted for sliding movement in the fore-and-aft direction, it will be appreciated that the partition could be mounted for sliding movement laterally over the partition 18. In this case the auxiliary area 16 would be equipped with suitable means such as a fixed bulkhead in addition to, or forming part of, a bulkhead at the forward end of the compartment, for securing a wheelchair in the auxiliary area when required. The movable partition could alternatively be hinged, for example so as to be movable about a vertical axis from a normal position in which it shuts off the main passenger area 14 from the auxiliary area 16, to an alternative position in which if extends forwardly substantially along the centre line of the vehicle, adjacent to or in place of the lateral partition 19. Likewise, a hinged partition could be formed by two separate panels, one hinged to a pillar between doors 15 and 17, and the other hinged to a central pillar at the junction between partitions 18 and 19.

Whilst the invention primarily envisages the use of a movable partition for the purpose of separating an auxiliary area from the main passenger area and converting at least part of the auxiliary area into a forward extension of the main passenger area for the reception of a wheelchair, it would also be within the scope of the invention for such a partition to be fixed in the forward position so as to define a permanent forward extension of the main passenger area, in any case where a vehicle is intended to provide a permanent facility for the reception of a wheelchair. Likewise, as previously mentioned, the auxiliary area may define a forward extension of a main area which is not specifically fitted for the conveyance of passengers.

The invention, as exemplified by the above, encompasses a road vehicle having any combination of the following features:-

a driving area equipped with driving controls, and a main passenger area rearwardly of the driving area with seating for at least one passenger in addition to the driver, and an auxiliary area laterally adjacent to the driving area and forming a forward extension of the main passenger area so dimensioned as to enable a wheelchair and a person in such wheelchair to be accommodated in the extended passenger area;

a movable partition which in one position divides the auxiliary area from the main passenger area and which in another position makes at least part of said auxiliary area available as said extension of the main passenger area;

such movable partition is movable slidably in the fore and aft direction, or laterally, or is movable pivotally on hinges;

such partition is constructed as a bulkhead adapted to be secured firmly in load-transmitting manner to the vehicle body structure;

such partition extends effectively over the full height of the compartment and across the full width of the auxiliary area;

such partition incorporates runners engageable in tracks carried by the vehicle body structure;

such partition incorporates releasable locking means for securing the partition in alternative positions;

such partition is provided with two support assemblies at its upper edge which incorporate runners which are mounted at the compartment roof;

such partition is provided with two lower support assemblies at its lower edge which incorporate runners to engage in tracks mounted on the compartment floor;

such partition is provided with a single lower support assembly adjacent to its lower edge which incorporates runners to engage a track provided at a position clear of the floor of the auxiliary area;

such support assemblies incorporate spaced roller members engageable with the tracks;

such support assemblies comprise elongated support members which are slidably received within an elongated roller carrier member which is itself slidably received in a respective track;

the locking means includes at least one plunger which is engageable in holes;

the locking means includes a plurality of locking members which are releasably engageable with corresponding pins;

such locking members are carried by the movable partition itself;

two such locking members are provided at opposite ends of the upper edge of the partition to co-operate with pins disposed adjacent to opposed ends of tracks engaged by support assemblies provided at opposite ends of the upper edge of the partition;

one such locking member is provided at the inboard edge of the partition adjacent to its lower edge to co-operate with pins which are disposed adjacent to opposed ends of a track engaged by a support assembly provided at the inboard edge of the partition;

one such locking member is provided at the outboard edge of the partition adjacent to its lower edge to co-operate with pins which are disposed at the junction between the floor and side of the compartment;

the main area is divided from the driving area by means of a fixed partition, and a further partition is provided between the driving area and the auxiliary area;

the vehicle is provided with a rear tailgate or door giving access to the rear of the main area whereby the auxiliary area may receive the forward end of a stretcher arranged lengthwise of the vehicle;

at least part of any passenger seating in the main area, which seating is arranged directly behind the auxiliary area, is foldable downwardly or at least partially movable to form a clear area extending from the auxiliary area to the rear of the vehicle for the reception of a stretcher or other long load;

runners are provided for mounting between the partition and the rear of the compartment to receive such stretcher or other elongated load;

a foldable or detachable ramp is provided to enable a wheelchair to be moved into the main area.

- 12 -

0148596

CLAIMS:-

1. A passenger-carrying road vehicle having a compartment (10) which affords a driving area (12) equipped with driving. controls, and a main passenger area (14) rearwardly of the driving area with seating for at least one passenger in addition to the driver, characterised by an auxiliary area (16) laterally adjacent to the driving area (12) and forming a forward extension of the main passenger area so dimensioned as to enable a wheelchair and a person in such wheelchair to be accommodated in the extended passenger area.

2. A vehicle according to Claim 1 wherein a movable partition (20;120;220) is provided, which in one position divides the auxiliary area (16) from the main passenger area (14) and which in another position makes at least part of said auxiliary area (14) available as said extension of the main passenger area (14).

3. A road vehicle having a compartment (10) with a main usable area (14) and an auxiliary area (16) adjacent thereto, wherein a movable partition (20;120;220) is provided which in one position separates the auxiliary area (16) from the main usable area (14), and which in another position allows at least part of the auxiliary area to serve as an extension of the main usable area (14) whereby a wheelchair and a person therein may be accommodated at least partially in said extension area.

4. A vehicle according to any one of the preceeding claims wherein the movable partition (20;120;220) is movable in the fore-and-aft direction.

5. A vehicle according to Claim 4 wherein the partition (20;120;220) is constructed as a bulkhead adapted to be secured firmly in a load-transmitting manner to the vehicle body structure and extends effectively over the full height of the compartment (10) and across the full width of the auxiliary area (16).

6. A vehicle according to Claim 5 wherein the partition (20;120;220) incorporates runners engageable in tracks carried by the vehicle body structure and releasable locking means (30;130;230) for securing the partition in said alternative positions.

- 13 -

0148596

7. A vehicle according to Claim 6 wherein the partition (120;220) is provided with two support assemblies (121,122) at the upper edge which incorporate said runners to engage in tracks (124;224) mounted at the compartment roof, and a further support assembly (125;225) adjacent to the lower edge which incorporate said runners to engage a track (125;229) provided at a position clear of the floor of the auxiliary area (16).

8. A vehicle according to Claim 6 wherein the locking means (30;130) includes at least one plunger (31;131) which is engageable in holes.

9. A vehicle according to Claim 6 wherein the locking means (230) includes a plurality of locking members (231) which are releasably engageable with corresponding pins (234,234a,235,235a).

10. A vehicle according to the preceeding claims wherein the vehicle is provided with a rear tail gate or door giving access to the rear of the main area (14) whereby the auxiliary area (16) may receive the forward end of a stretcher arranged lengthwise of the vehicle.

FIG 1

FIG 2

FIG 3

FIG 4

FIG 5

4/7

0148596

FIG 6

5/7

0148596

0148596

235
224
235
223ª
224
230 231ª 233
231ª
234
223
222
221
223ª
233
234
220ª
223
231
220

237
236

FIG 7

229
231
226ª
225
226

FIG 8

0148596

European Patent Office

EUROPEAN SEARCH REPORT

Application number

EP 84 30 8561

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | FR-A-1 597 340 (DEUTSCHE FIAT)<br>* Page 4, lines 31-36; figure 1 * | 1 | A 61 G 5/00<br>B 62 D 47/00<br>B 60 P 3/42 |
| Y | DE-A-3 123 145 (SCHACHT)<br>* Page 13, lines 11-14; figure 1 * | 1,3 | |
| Y | US-A-3 694 025 (BUEHRIG)<br>* Column 4, lines 47-53; figures 2,4,7 * | 3 | |
| A | | 2 | |
| A | GB-A-1 462 767 (TOWNS)<br>* Page 2, lines 121-123; page 3, lines 30-43; figure 3 * | 1 | |
| A | DE-C- 822 656 (KÄSSBOHRER)<br>* Page 2, lines 82-106; figures 1,3,4 * | 4,5,8 | TECHNICAL FIELDS SEARCHED (Int. Cl.4)<br><br>A 61 G 5/00<br>B 60 P 3/00<br>B 62 D 47/00 |
| A | EP-A-0 002 209 (WAGGON UNION)<br>* Page 5, line 33 - page 6, line 14; figure * | 4-6,8 | B 62 D 31/00<br>B 62 D 63/00<br>B 60 P 7/00 |
| A | US-A-3 104 624 (CANDLIN et al.)<br>* Column 2, line 72 - column 3, line 2; column 3, lines 15-25; column 3, line 65 - column 4, line 1; figure 1 * | 7 | |

--- -/-

The present search report has been drawn up for all claims

| Place of search | Date of completion of the search | Examiner |
|---|---|---|
| THE HAGUE | 12-03-1985 | OSBORNE J. |

EPO Form 1503 03.82

European Patent
Office

**EUROPEAN SEARCH REPORT**

0148596
Application number

EP 84 30 8561

Page 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-2 997 336 (HUGGINS et al.) <br> * Column 3, lines 8-11; column 4, lines 17-28; figure 5 * | 10 | |
| A | US-A-1 611 248 (SMITH et al.) | | |

TECHNICAL FIELDS
SEARCHED (Int. Cl.4)

The present search report has been drawn up for all claims

| Place of search | Date of completion of the search | Examiner |
|---|---|---|
| THE HAGUE | 12-03-1985 | OSBORNE J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82